# EUROPÄISCHE PATENTSCHRIFT

(11) **EP 3 494 003 B1**
(45) Veröffentlichungstag und Bekanntmachung des Hinweises auf die Patenterteilung: **07.04.2021**
(21) Anmeldenummer: 17754085.3
(22) Anmeldetag: 26.07.2017
(51) Int. Cl.: B60K 23/02

(54) **VERFAHREN ZUM BETREIBEN EINER KUPPLUNG EINES KRAFTFAHRZEUGS, SOWIE KRAFTFAHRZEUG**
METHOD FOR OPERATING A CLUTCH OF A MOTOR VEHICLE, AND MOTOR VEHICLE
PROCÉDÉ DE FONCTIONNEMENT D'UN EMBRAYAGE D'UN VÉHICULE À MOTEUR ET VÉHICULE À MOTEUR

(30) Priorität: 04.08.2016 DE 102016214421
(43) Veröffentlichungstag der Anmeldung: 12.06.2019
(73) Patentinhaber: Audi AG, 85045 Ingolstadt (DE)
(72) Erfinder: BÄR, Michael, 85053 Ingolstadt (DE); ARNDT, Martin, 85049 Ingolstadt (DE); GRAF, Christian, 85053 Ingolstadt (DE); WEIN, Michael, 92358 Seubersdorf (DE); BAUR, Marc, 85049 Ingolstadt (DE); LEHNER, Stefan, 85123 Karlskron (DE); HÜFNER, Stefan, 85049 Ingolstadt (DE)
(86) Internationale Anmeldenummer: PCT/EP2017/068943
(87) Internationale Veröffentlichungsnummer: WO 2018/024582

(56) Entgegenhaltungen:
- WO-A1-2015/054368
- DE-A1- 19 838 169
- US-A- 4 669 569
- US-A1- 2011 035 130

## Beschreibung

Die Erfindung betrifft ein Verfahren zum Betreiben einer Kupplung eines Kraftfahrzeugs gemäß dem Oberbegriff von Patentanspruch 1 sowie ein Kraftfahrzeug mit einem Antriebsstrang.

Derartige Verfahren zum Betreiben von Kupplungen von Kraftfahrzeugen sind aus dem allgemeinen Stand der Technik und insbesondere aus dem Serienfahrzeugbau bereits hinlänglich bekannt. Dabei ist die jeweilige Kupplung Bestandteil eines jeweiligen Antriebsstrangs, mittels welchem das jeweilige Kraftfahrzeug antreibbar ist. Der Antriebsstrang umfasst somit die Kupplung sowie einen Antriebsmotor, welcher beispielsweise als Verbrennungskraftmaschine ausgebildet sein kann. Darüber hinaus umfasst der Antriebsstrang eine Primärachse, welche eine erste Achse ist beziehungsweise auch als erste Achse bezeichnet wird und erste Räder aufweist. Dabei sind die ersten Räder von dem Antriebsmotor antreibbar.

Der Antriebsstrang umfasst ferner eine in Fahrzeuglängsrichtung von der Primärachse beabstandete Sekundärachse, welche zweite Räder aufweist. Die Sekundärachse wird auch als zweite Achse bezeichnet beziehungsweise ist eine zweite Achse des Antriebsstrangs, wobei die zweiten Räder über die Kupplung von dem Antriebsmotor antreibbar sind. Beispielsweise ist die Primärachse eine Vorderachse, sodass die ersten Räder Vorderräder sind. Dabei ist beispielweise die Sekundärachse eine in Fahrzeuglängsrichtung hinter der Vorderachse angeordnete Hinterachse, sodass die zweiten Räder beispielsweise Hinterräder sind.

Bei dem jeweiligen Verfahren wird die jeweilige Kupplung zwischen einer Schließstellung und wenigstens einer von der Schließstellung unterschiedlichen zweiten Stellung verstellt. In der Schließstellung sind die Achsen über die Kupplung miteinander gekoppelt. Mit anderen Worten koppelt die Kupplung die Achsen in der Schließstellung der Kupplung miteinander. Dabei ist in der Schließstellung ein erstes Kupplungsmoment der Kupplung eingestellt. In der von der Schließstellung unterschiedlichen, zweiten Stellung koppelt die Kupplung die Achsen weniger stark als in der Schließstellung miteinander. Dabei ist in der zweiten Stellung ein gegenüber dem ersten Kupplungsmoment geringeres zweites Kupplungsmoment der Kupplung eingestellt. Um somit beispielsweise die Kupplung aus der Schließstellung in die zweite Stellung zu verstellen, wird die Kupplung zumindest teilweise geöffnet. In der Schließstellung kann die Kupplung beispielsweise maximal ein erstes Drehmoment übertragen, sodass maximal beziehungsweise höchstens das erste Drehmoment über die Kupplung zwischen den Achsen übertragen werden kann. In der von der Schließstellung unterschiedlichen zweiten Stellung kann die Kupplung beispielsweise maximal ein gegenüber dem ersten Drehmoment geringeres, zweites Drehmoment übertragen, sodass in der zweiten Stellung maximal beziehungsweise höchstens das zweite Drehmoment zwischen den Achsen über die Kupplung übertragen werden kann. Somit ist in der zweiten Stellung im Vergleich zur Schließstellung ein geringeres Kupplungsmoment der Kupplung eingestellt.

Die US 2005/0121247 A1 offenbart ein Verfahren zum Betreiben eines Antriebsstrangs eines Kraftfahrzeugs, bei welchem eine Kupplung, deren Verbindungskraft variabel ist, zwischen einer Vorderachse und einer Hinterachse bereitgestellt wird. Im Rahmen des Verfahrens kann das Kraftfahrzeug in einem herkömmlichen Modus und in einem Anti-Vibrationsmodus betrieben werden.

Die DE 10 2010 047 443 A1 offenbart ein Fahrzeug mit einem Allradsystem, bei dem die Vorderachse und die Hinterachse des Fahrzeugs mit unterschiedlich großen Vorderachs- und Hinterachsmomenten antreibbar sind, wobei sich aus einer Momentendifferenz zwischen den Vorderachs- und Hinterachsmomenten eine Drehzahldifferenz zwischen einer vorderachsseitigen Drehzahl und einer hinterachsseitigen Drehzahl ergibt. Ferner ist es vorgesehen, dass das Fahrzeug eine Einheit zur Ermittlung eines Straßenreibwertes aufweist, wobei die Einheit die Drehzahldifferenz erfasst. Die Einheit ermittelt auf der Grundlage eines aus der Drehzahldifferenz und der Momentendifferenz beziehungsweise damit korrelierender Parameter bestehenden Wertepaars den Straßenreibwert.

Außerdem ist aus der DE 10 2009 009 264 A1 eine Kraftübertragungsvorrichtung zum Verteilen einer von einem Getriebesystem ausgegebenen Antriebskraft zu einem Hauptantriebsrad und einem Nebenantriebsrad bekannt. Aufgabe der vorliegenden Erfindung ist es, ein Verfahren und ein Kraftfahrzeug der eingangs genannten Art derart weiterzuentwickeln, dass ein besonders komfortabler Betrieb des Kraftfahrzeugs realisierbar ist.

Des Weiteren offenbart die DE 198 38 169 A1 ein System zur Steuerung der Antriebskraftverteilung eines Allradantriebsfahrzeugs.

Darüber hinaus ist der US 4 669 569 A ein Fahrzeug mit Vierradantrieb und einem Motor als bekannt zu entnehmen.

Diese Aufgabe wird durch ein Verfahren mit den Merkmalen des Patentanspruchs 1 sowie durch ein Kraftfahrzeug mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben einer Kupplung eines Kraftfahrzeugs, insbesondere eines Kraftwagens wie beispielsweise eines Personenkraftwagens. Die Kupplung ist dabei Bestandteil eines Antriebsstrangs des Kraftfahrzeugs, welches mittels des Antriebsstrangs antreibbar ist. Der Antriebsstrang umfasst somit die Kupplung und einen Antriebsmotor, welcher beispielsweise als Verbrennungskraftmaschine oder aber als elektrische Maschine beziehungsweise als Elektromotor ausgebildet sein kann.

Der Antriebsstrang umfasst eine Primärachse, welche von dem Antriebsmotor antreibbare erste Räder aufweist. Die Primärachse ist eine erste Achse des Antriebsstrangs beziehungsweise wird auch als erste Achse bezeichnet. Der Antriebsstrang umfasst ferner eine in Fahrzeuglängsrichtung von der Primärachse beabstandete Sekundärachse, welche zweite Räder aufweist. Die Sekundärachse ist eine zweite Achse des Antriebsstrangs beziehungsweise wird auch als zweite Achse bezeichnet. Dabei sind die zweiten Räder über die Kupplung von dem Antriebsmotor antreibbar.

Beispielsweise ist die Primärachse eine Vorderachse, sodass die ersten Räder Vorderräder sind. Dabei ist beispielweise die Sekundärachse eine in Fahrzeuglängsrichtung hinter der Vorderachse angeordnete Hinterachse, sodass die zweiten Räder beispielsweise Hinterräder sind. Somit ist beispielsweise die Hinterachse als sogenannte Hang-On-Hinterachse ausgebildet. Alternativ ist es denkbar, dass die Hinterachse die Primärachse und die Vorderachse die Sekundärachse ist, sodass dann die Vorderachse als sogenannte Hang-On-Vorderachse ausgebildet ist.

Bei dem Verfahren wird die Kupplung zwischen einer Schließstellung und wenigstens einer von der Schließstellung unterschiedlichen, zweiten Stellung verstellt. In der Schließstellung sind die Achsen über die Kupplung miteinander gekoppelt. Dabei ist in der Schließstellung ein erstes Kupplungsmoment der Kupplung eingestellt. In der zweiten Stellung koppelt die Kupplung die Achsen weniger stark als in der Schließstellung miteinander. Dabei ist in der zweiten Stellung ein gegenüber dem ersten Kupplungsmoment geringeres zweites Kupplungsmoment der Kupplung eingestellt. Um beispielsweise die Kupplung aus der Schließstellung in die zweite Stellung zu verstellen, wird die Kupplung zumindest teilweise geöffnet. Dies bedeutet beispielsweise, dass die Achsen in der Schließstellung der Kupplung über die Kupplung stärker als in der zweiten Stellung der Kupplung miteinander gekoppelt sind, sodass die Achsen in der zweiten Stellung der Kupplung über die Kupplung weniger stark als in der Schließstellung der Kupplung miteinander gekoppelt sind. Beispielsweise kann die Kupplung in der Schließstellung maximal beziehungsweise höchstens ein erstes Drehmoment übertragen, sodass beispielsweise in der Schließstellung der Kupplung maximal beziehungsweise höchstens das erste Drehmoment zwischen den Achsen über die Kupplung übertragen werden kann. In der zweiten Stellung kann die Kupplung beispielsweise höchstens beziehungsweise maximal ein gegenüber dem ersten Drehmoment geringeres, zweites Drehmoment übertragen, sodass beispielsweise in der zweiten Stellung der Kupplung höchstens beziehungsweise maximal das gegenüber dem ersten Drehmoment geringere zweite Drehmoment zwischen den Achsen über die Kupplung übertragen werden kann. Somit ist in der zweiten Stellung im Vergleich zur ersten Stellung ein geringeres Kupplungsmoment der Kupplung eingestellt.

Um nun einen besonders komfortablen Betrieb des Antriebsstrangs und somit des Kraftfahrzeugs insgesamt realisieren zu können, umfasst das Verfahren erfindungsgemäß einen ersten Schritt, bei welchem wenigstens ein Reibwert einer Fahrbahn, auf welcher sich das Kraftfahrzeug befindet, ermittelt wird. Der Reibwert wird beispielsweise mittels einer elektronischen Recheneinrichtung, insbesondere des Kraftfahrzeugs, ermittelt, wobei die elektronische Recheneinrichtung auch als Steuergerät bezeichnet wird.

Erfindungsgemäß umfasst das Verfahren ferner einen zweiten Schritt, bei welchem in Abhängigkeit von dem ermittelten Reibwert, insbesondere mittels der elektronischen Recheneinrichtung, ein Grundmoment der Kupplung eingestellt wird, welche in der zweiten Stellung durch das Grundmoment vorgespannt ist. Dies bedeutet, dass die Kupplung in der zweiten Stellung nicht vollständig geöffnet ist, sondern die Kupplung ist in der zweiten Stellung geschlossen, wobei die Kupplung jedoch in der zweiten Stellung weniger weit beziehungsweise weniger stark als in der Schließstellung geschlossen ist. Dadurch sind die Achsen sowohl in der Schließstellung als auch in der zweiten Stellung der Kupplung über die Kupplung miteinander gekoppelt, wobei die Achsen in der zweiten Stellung über die Kupplung weniger stark miteinander gekoppelt sind als in der Schließstellung. Somit kann beispielsweise in der Schließstellung höchstens das von Null unterschiedliche und gegenüber dem zweiten Drehmoment größere erste Drehmoment über die Kupplung an die Achse übertragen werden. In der zweiten Stellung kann höchstens das von Null unterschiedliche und gegenüber dem ersten Drehmoment geringere zweite Drehmoment über die Kupplung zwischen den Achsen übertragen werden. Somit ist beispielsweise in der Schließstellung ein von Null unterschiedliches erstes Kupplungsmoment der Kupplung eingestellt, wobei in der zweiten Stellung ein von Null unterschiedliches, gegenüber dem ersten Kupplungsmoment geringeres, zweites Kupplungsmoment eingestellt ist. Dabei ist beispielsweise das zweite Kupplungsmoment das Grundmoment, welches von Null unterschiedlich und geringer als das erste Kupplungsmoment ist, das in der Schließstellung der Kupplung eingestellt ist.

Durch das von Null unterschiedliche Grundmoment ist die Kupplung in der zweiten Stellung vorgespannt, sodass beispielsweise die Kupplung ausgehend von der zweiten Stellung besonders schnell geschlossen, insbesondere weiter geschlossen, werden kann, sodass die Kupplung beispielsweise ausgehend von der zweiten Stellung besonders schnell in die Schließstellung verstellt werden kann.

Der Erfindung liegt dabei die Idee zugrunde, kein konstantes Grundmoment zum Vorspannen der Kupplung in der zweiten Stellung zu verwenden, sondern gemäß der Erfindung wird das Grundmoment in Abhängigkeit von dem ermittelten Reibwert variiert. Dadurch können beispielsweise Vibrationen beziehungsweise Schwingungen des Antriebsstrangs, insbesondere bei Abbiegemanövern und somit bei Kurvenfahrten des Kraftfahrzeugs, vermieden oder zumindest besonders gering gehalten werden, sodass sich ein besonders hoher Fahrkomfort, insbesondere für Insassen des Kraftfahrzeugs, darstellen lässt.

Der Antriebsstrang ist dabei als Allrad-Antriebsstrang oder als Allradsystem ausgebildet, wobei mittels der Kupplung bedarfsgerecht zwischen einem Zweiradantrieb und einem Vierrad- beziehungsweise Allradantrieb umgeschaltet werden kann. Ist die Primärachse die Vorderachse, so ist der Zweiradantrieb ein Vorderradantrieb. Ist die Primärachse die Hinterachse, so ist der Zweiradantrieb ein Hinterrad- beziehungsweise Heckantrieb.

Zum Einstellen des Vierrad- beziehungsweise Allradantriebs wird die Kupplung beispielsweise geschlossen beziehungsweise in ihre Schließstellung verstellt, sodass sowohl die ersten Räder als auch die zweiten Räder von dem Antriebsmotor, insbesondere in einem Zugbetrieb des Antriebsmotors, antreibbar sind beziehungsweise angetrieben werden. Zur Realisierung des Zweiradantriebs wird die Kupplung beispielsweise ausgehend von der Schließstellung in die zweite Stellung bewegt und somit geöffnet, wobei die Kupplung vorzugsweise nicht vollständig geöffnet, sondern durch das Grundmoment in der zweiten Stellung vorgespannt wird. Dadurch werden beispielsweise bezogen auf die Räder lediglich die ersten Räder von dem Antriebsmotor angetrieben beziehungsweise die zweiten Räder werden, insbesondere im Zugbetrieb des Antriebsmotors, weniger stark als bei Einstellen des Vierrad- beziehungsweise Allradantriebs über die Kupplung angetrieben. Da das Grundmoment von Null unterschiedlich ist, sind die Achsen in der zweiten Stellung der Kupplung beispielsweise über die Kupplung miteinander gekoppelt, wobei die Achsen jedoch im Vergleich zur Schließstellung weniger stark über die Kupplung miteinander gekoppelt sind.

Es wurde gefunden, dass bei kupplungsbasierten Allradsystemen, insbesondere bei Abbiegemanövern und somit bei Kurvenfahrten, eine starke Schwingungsneigung beim Drehzahlausgleich der beispielsweise sich auf unterschiedlichen Bahnradien bewegenden Achsen besteht. Ferner kann es zu einem Zielkonflikt zwischen der Realisierung einer vorteilhaften Akustik und der Realisierung einer vorteilhaften Traktion kommen, da zur Realisierung einer vorteilhaften Traktion eine mittels der Kupplung zu bewirkende starke Kopplung der Achsen wünschenswert ist. Zur Realisierung der starken Kopplung der Achsen wird der Antriebsstrang beispielsweise überpresst beziehungsweise in einem überpressten Zustand betrieben, in welchem die Kupplung in ihrer Schließstellung so stark geschlossen ist, insbesondere zusammengepresst wird, dass in der Kupplung und zwischen den Achsen keine Differenzgeschwindigkeiten beziehungsweise kein Schlupf auftreten beziehungsweise auftritt.

Zur Realisierung einer vorteilhaften Akustik jedoch ist eine nur geringe, mittels der Kupplung zu bewirkende Kopplung wünschenswert, insbesondere bei Abbiegemanövern in niedrigen Geschwindigkeitsbereichen, da dabei eine besonders starke Schwingungsneigung besteht.

Um diesen Zielkonflikt zu entschärfen beziehungsweise zu lösen, wird das Grundmoment in Abhängigkeit von dem ermittelten Reibwert eingestellt, wodurch eine situationsadaptive Momentendeckelung realisiert werden kann. Somit ist es beispielsweise möglich, je nach Fahrsituation, insbesondere je nach Reibwert, eine starke Kopplung der Achsen über die Kupplung und somit eine besonders gute Traktion oder aber eine nur geringe Kopplung der Achsen und somit eine besonders vorteilhafte Akustik des Antriebsstrangs realisieren zu können. Das erfindungsgemäße Verfahren ist dabei vorteilhafter gegenüber solchen Momentendeckelungen beziehungsweise Momentenreduktionen, welche auf stationären lenkwinkelabhängigen Maximalmomenten basieren, die beispielsweise bei Kickdown deaktiviert werden. Es wurde gefunden, dass Momentenreduktionen, welche auf stationären lenkwinkelabhängigen Maximalmomenten basieren, aufgrund geringer Grundmomente zu inakzeptablen Traktionseigenschaften, insbesondere bei Abbiegemanövern, führen können. Dieser Nachteil beziehungsweise diese Problematik kann mittels des erfindungsgemäßen Verfahrens vermieden werden. Mittels des erfindungsgemäßen Verfahrens ist es somit möglich, auch in einem effizienzoptimierten und somit bauraum- und gewichtsgünstig ausgestalteten Antriebsstrang Allrad- beziehungsweise Vierradeigenschaften und somit eine vorteilhafte Traktion sicherzustellen, wobei gleichzeitig übermäßige Schwingungen und daraus resultierende, übermäßige Komfortbeeinträchtigungen vermieden werden können.

Der Reibwert der Fahrbahn wird beispielsweise auf Basis einer Stabilitätsbetrachtung zumindest eines der Räder ermittelt, insbesondere geschätzt. Wird beispielsweise im Rahmen der Stabilitätsbetrachtung erfasst, dass das zumindest eine Rad zu einem Zeitpunkt an seine Kraftschlussgrenze, welche beispielsweise durch den Kamm'schen Kreis charakterisiert beziehungsweise veranschaulicht werden kann, kommt oder die Kraftschlussgrenze überschreitet, so zu dem Zeitpunkt auf das Kraftfahrzeug wirkende Beschleunigungen, insbesondere die Längsbeschleunigung und die Querbeschleunigung, erfasst. Auf Basis der Beschleunigungen, insbesondere durch Vektoraddition von Kraftvektoren der Längs- und Querbeschleunigung, kann auf den Reibwert rückgeschlossen werden. Dabei ist beispielsweise die Summe der Vektoraddition der Radius des Kamm'schen Kreises und ein Maß für den Reibwert der Fahrbahn. Beispielsweise kann anhand einer Differenz zwischen der Drehzahl des zumindest einen Rads und der Drehzahl wenigstens eines anderen der Räder erfasst werden, dass das zumindest eine Rad an seine Kraftschlussgrenze kommt oder diese überschreitet.

Erfindungsgemäß wird mittels einer elektronischen Recheneinrichtung des Kraftfahrzeugs anhand wenigstens eines Rechenmodells ein erwartetes Verhalten, insbesondere Fahrverhalten, des Kraftfahrzeugs berechnet, wobei der Reibwert in Abhängigkeit von dem berechneten Verhalten ermittelt wird. Hierdurch kann das Grundmoment besonders gut an jeweilige Fahrsituationen angepasst werden, sodass der zuvor genannte Zielkonflikt gelockert oder gelöst werden kann.

Um einen besonders hohen Fahrkomfort realisieren zu können, ist es bei einer Ausführungsform der Erfindung vorgesehen, dass das Grundmoment der Kupplung in Abhängigkeit von einem Lenkwinkel des Kraftfahrzeugs eingestellt wird. Die Räder zumindest einer der Achsen, insbesondere die Vorderräder, sind beispielsweise als gelenkte oder lenkbare Räder ausgebildet, welche zum Bewirken von Kurvenfahrten beziehungsweise Abbiegemanövern des Kraftfahrzeugs um eine Lenkachse verschwenkt werden können, wodurch unterschiedliche Lenkwinkel der lenkbaren Räder und somit des Kraftfahrzeugs eingestellt werden können. Durch die Berücksichtigung des Lenkwinkels beim Einstellen des Grundmoments kann das Grundmoment bedarfsgerecht an den Lenkwinkel und somit an Kurvenfahrten beziehungsweise Abbiegemanövern angepasst werden, sodass eine besonders vorteilhafte situationsadaptive Momentendeckelung realisierbar ist. Dadurch können übermäßige Schwingungen des Antriebsstrangs, insbesondere bei Abbiegemanövern mit geringen Geschwindigkeiten, vermieden werden.

Um das Grundmoment besonders bedarfsgerecht einstellen zu können, ist es bei einer weiteren Ausführungsform der Erfindung vorgesehen, dass eine Drehzahl wenigstens eines der Räder, insbesondere mittels eines Drehzahlsensors, erfasst wird, wobei der Reibwert in Abhängigkeit von der erfassten Drehzahl ermittelt wird. In der Folge kann der Reibwert besonders präzise ermittelt, insbesondere geschätzt, werden, sodass in der Folge das Grundmodell besonders vorteilhaft angepasst beziehungsweise eingestellt werden kann.

Eine weitere Ausführungsform zeichnet sich dadurch aus, dass der Reibwert in Abhängigkeit von einem Lenkwinkel des Kraftfahrzeugs ermittelt wird. Dadurch kann der Reibwert besonders präzise ermittelt werden, sodass das Grundmoment situationsgerecht eingestellt werden kann. In der Folge kann ein besonders hoher Fahrkomfort realisiert werden.

In weiterer Ausgestaltung der Erfindung wird wenigstens eine auf das Kraftfahrzeug wirkende Beschleunigung, insbesondere mittels wenigstens eines Beschleunigungssensors, erfasst, wobei der Reibwert in Abhängigkeit von der erfassten Beschleunigung ermittelt wird. Hierdurch kann der Reibwert besonders präzise ermittelt beziehungsweise geschätzt werden, sodass in der Folge das Grundmoment besonders bedarfsgerecht an den Reibwert und somit an die jeweilige Fahrsituation angepasst werden kann.

Bei einer besonders vorteilhaften Ausführungsform der Erfindung wird der Reibwert in Abhängigkeit von einer Gierrate des Kraftfahrzeugs ermittelt, wodurch der Reibwert besonders vorteilhaft und präzise ermittelt beziehungsweise geschätzt werden kann.

Bei einer weiteren Ausführungsform der Erfindung wird als die Kupplung eine reibschlüssige Kupplung verwendet, wobei die reibschlüssige Kupplung beispielsweise als Lamellenkupplung ausgebildet ist. Die reibschlüssige Kupplung, welche auch als Reibkupplung bezeichnet wird, umfasst wenigstens zwei Reibpartner, über welche, insbesondere je nach Stellung der Kupplung, Drehmomente übertragbar sind, sodass die zweiten Räder über die Reibpartner von dem Antriebsmotor antreibbar sind. Zum Einstellen des jeweiligen, zuvor beschriebenen Kupplungsmoments werden die Reibpartner beispielsweise mit einer jeweiligen Anpresskraft zusammengepresst. Die Anpresskraft kann beispielsweise hydraulisch, pneumatisch oder elektrisch beziehungsweise elektromechanisch bewirkt werden. Zum Einstellen des ersten Kupplungselements werden die Reibpartner beispielsweise mittels einer ersten Anpresskraft zusammengepresst, wobei zur Realisierung des zweiten Kupplungselements die Reibpartner beispielsweise mittels einer gegenüber der ersten Anpresskraft geringeren, zweiten Anpresskraft zusammengepresst werden. Somit sind die Reibpartner in der zweiten Stellung zusammengepresst, jedoch weniger stark zusammengepresst als in der Schließstellung, sodass die Kupplung in der zweiten Stellung vorgespannt ist.

Durch die Verwendung der reibschlüssigen Kupplung, insbesondere der Lamellenkupplung, kann die Kupplung besonders bedarfsgerecht zwischen der zweiten Stellung und der Schließstellung umgeschaltet werden, wodurch besonders bedarfsgerecht zwischen dem Zweirad- beziehungsweise Vorder- oder Hinterradantrieb und dem Vierrad- beziehungsweise Allradantrieb umgeschaltet werden kann. Insbesondere ist es durch die Verwendung einer reibschlüssigen Kupplung, insbesondere einer Lamellenkupplung, möglich, das Grundmoment besonders einfach und besonders bedarfsgerecht einstellen zu können, sodass sich ein besonders hoher Fahrkomfort realisieren lässt.

Ein zweiter Aspekt der Erfindung betrifft ein beispielsweise als Kraftwagen, insbesondere Personenkraftwagen, ausgebildetes Kraftfahrzeug, mit einem Antriebsstrang, welcher zum Durchführen eines erfindungsgemäßen Verfahrens ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Die Zeichnung zeigt in:

- Fig. 1: eine schematische Darstellung eines Antriebsstrangs eines Kraftfahrzeugs, wobei ein Grundmoment einer Kupplung des Antriebsstrangs in Abhängigkeit von einem ermittelten Reibwert eingestellt wird; und
- Fig. 2: ein Blockschaltbild zum Veranschaulichen eines Verfahrens zum Betreiben der Kupplung.

In den Fig. sind gleiche oder funktionsgleiche Elemente mit gleichen Bezugszeichen versehen.

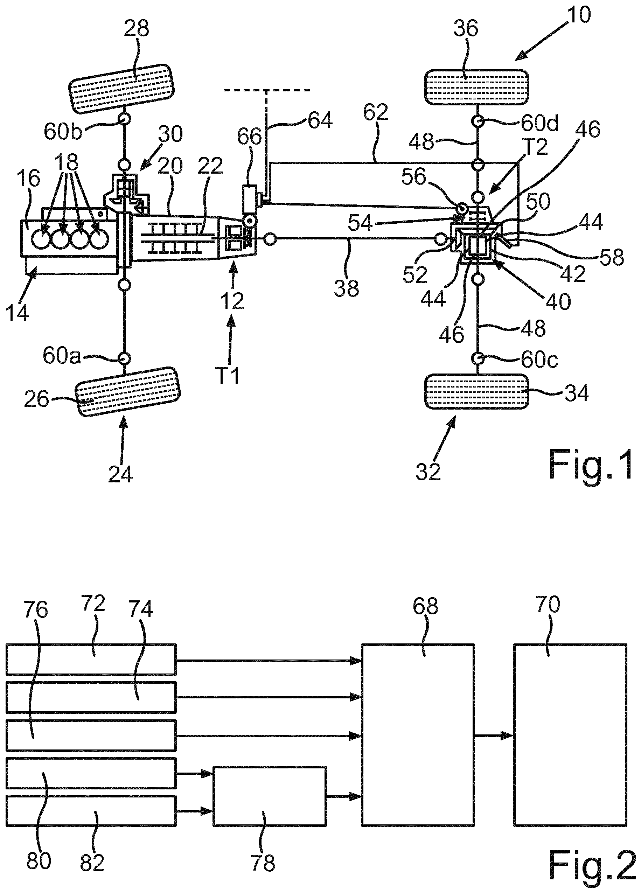

Fig. 1 zeigt in einer schematischen Darstellung einen Antriebsstrang 10 für ein beispielsweise als Kraftwagen, insbesondere Personenkraftwagen, ausgebildetes Kraftfahrzeug. Der Antriebsstrang 10 umfasst eine vorliegend als Lamellenkupplung 12 ausgebildete Kupplung, welche somit als reib- beziehungsweise kraftschlüssige Kupplung ausgebildet ist. Ferner umfasst der Antriebsstrang 10 einen Antriebsmotor 14, welcher vorliegend als Verbrennungskraftmaschine beziehungsweise als Verbrennungsmotor ausgebildet ist. Alternativ dazu ist es denkbar, dass der Antriebsmotor 14 als elektrische Maschine beziehungsweise als Elektromotor ausgebildet ist. Bei dem in den Fig. veranschaulichten Ausführungsbeispiel umfasst der Antriebsmotor 14 ein Zylindergehäuse 16, durch welches Brennräume in Form von Zylindern 18 gebildet sind. Ferner umfasst der Antriebsmotor 14 eine in Fig. 1 nicht erkennbare Abtriebswelle, welche um eine Drehachse relativ zu dem Zylindergehäuse 16 drehbar ist. Ist der Antriebsmotor 14 beispielsweise als Hubkolbenmaschine ausgebildet, so ist die Abtriebswelle beispielsweise als Kurbelwelle ausgebildet. Der Antriebsmotor 14 ist bei dem in den Fig. veranschaulichten Ausführungsbeispiel als längs eingebauter beziehungsweise längs verbauter Antriebsmotor ausgebildet, wobei die Drehachse zumindest im Wesentlichen in Fahrzeuglängsrichtung verläuft.

Der Antriebsstrang 10 umfasst ferner ein Getriebe 20, welches beispielsweise eine in Fig. 1 nicht erkennbare Getriebeeingangswelle und eine Getriebeausgangswelle 22 umfasst. Die Getriebeausgangswelle 22 ist beispielsweise von der Getriebeeingangswelle antreibbar. Die Getriebeeingangswelle ist beispielsweise über ein in Fig. 1 nicht dargestelltes Anfahrelement von der Abtriebswelle und somit von dem Antriebsmotor 14 antreibbar, sodass die Getriebeausgangswelle 22 über die Getriebeeingangswelle und das Anfahrelement von der Abtriebswelle und somit von dem Antriebsmotor 14 antreibbar ist. Die Lamellenkupplung 12 ist dabei von der Getriebeausgangswelle 22 und somit über die Getriebeausgangswelle 22, die Getriebeeingangswelle und das Anfahrelement von der Abtriebswelle beziehungsweise von dem Antriebsmotor 14 antreibbar. Beispielsweise in einem Zugbetrieb stellt der Antriebsmotor 14 über seine Abtriebswelle Drehmomente zum Antreiben des Kraftfahrzeugs bereit. Die Drehmomente können beispielsweise von der Abtriebswelle über das Anfahrelement, die Getriebeeingangswelle und die Getriebeausgangswelle 22 an die Lamellenkupplung 12 übertragen und in die Lamellenkupplung 12 eingeleitet werden, wodurch die Lamellenkupplung 12 antreibbar ist beziehungsweise angetrieben wird.

Der Antriebsstrang 10 umfasst eine Vorderachse 24, welche Vorderräder 26 und 28 aufweist. Die Vorderachse 24 ist eine Primärachse und somit eine erste Achse des Antriebsstrangs 10 beziehungsweise wird auch als erste Achse bezeichnet. Die Vorderräder 26 und 28 sind somit erste Räder des Antriebsstrangs 10 beziehungsweise werden auch als erste Räder bezeichnet. Die Vorderräder 26 und 28 sind, insbesondere über das Anfahrelement, von der Abtriebswelle und somit von dem Antriebsmotor 14 antreibbar. Dabei weist die Vorderachse 24 ein Differential 30 auf, welches auch als Vorderachsgetriebe oder Vorderachsdifferential bezeichnet wird. Die Vorderräder 26 und 28 sind dabei über das Differential 30 und insbesondere über das Anfahrelement von der Abtriebswelle antreibbar. Das Differential 30 ermöglicht einen Drehzahlausgleich zwischen den Vorderrädern 26 und 28, insbesondere bei Abbiegemanövern beziehungsweise bei Kurvenfahrten des Kraftfahrzeugs, sodass sich das kurvenäußere Rad schneller als das kurveninnere Rad drehen kann. Mit anderen Worten lässt das Differential 30 unterschiedliche Drehzahlen der Vorderräder 26 und 28 zu.

Der Antriebsstrang 10 umfasst ferner eine in Fahrzeuglängsrichtung von der Primärachse beabstandete und dabei in Fahrzeuglängsrichtung hinter der Vorderachse 24 angeordnete Hinterachse 32, welche Hinterräder 34 und 36 aufweist. Die Hinterachse 32 ist eine Sekundärachse und somit eine zweite Achse des Antriebsstrangs 10 beziehungsweise wird auch als zweite Achse bezeichnet. Dabei sind die Hinterräder 34 und 36 zweite Räder des Antriebsstrangs 10 beziehungsweise die Hinterräder 34 und 36 werden auch als zweite Räder bezeichnet. Die Hinterachse 32 ist somit bei dem in den Figuren veranschaulichten Ausführungsbeispiel als Hang-On-Hinterachse ausgebildet, welche bedarfsgerecht zu- und abgeschaltet werden kann. Die vorigen und folgenden Ausführungen sind ohne weiteres auch auf eine solche Ausführungsform entsprechend übertragbar, bei welcher die Hinterachse 32 die Primärachse und die Vorderachse 24 die Sekundärachse ist, sodass dann die Vorderachse 24 als Hang-On-Vorderachse ausgebildet und bedarfsgerecht zu- und abschaltbar ist.

Der Antriebsstrang 10 umfasst ferner eine vorliegend als Kardanwelle 38 ausgebildete Welle, wobei die Hinterräder 34 und 36 über die Kardanwelle 38 und über die Lamellenkupplung 12 von der Getriebeausgangswelle 22 und somit über die Getriebeausgangswelle 22, die Getriebeeingangswelle und das Anfahrelement von der Abtriebswelle und somit von dem Antriebsmotor 14 antreibbar sind. Dabei weist die Hinterachse 32 ein zweites Differential 40 auf, welches auch als Hinterachsdifferential oder Hinterachsgetriebe bezeichnet wird. Die Hinterräder 34 und 36 sind dabei über das Differential 40 von der Kardanwelle 38 antreibbar, wobei das Differential 40, insbesondere bei Abbiegemanövern beziehungsweise bei Kurvenfahrten des Kraftfahrzeugs, unterschiedliche Drehzahlen der Hinterräder 34 und 36 zulässt. Mit anderen Worten ermöglicht das Differential 40 einen Drehzahlausgleich zwischen den Hinterrädern 34 und 36, sodass sich beispielsweise bei einer Kurvenfahrt das kurvenäußere Rad schneller beziehungsweise mit einer höheren Drehzahl als das kurveninnere Rad drehen kann.

Die Funktion und der Aufbau des jeweiligen Differentials 30 beziehungsweise 40 sind hinlänglich bekannt, sodass darauf im Folgenden nur kurz am Beispiels des Differentials 40 eingegangen wird. Wie hinlänglich bekannt ist, weist das Differential 40 einen Korb 42 auf, an welchem Ausgleichsräder 44 drehbar gelagert sind. Ferner umfasst das Differential 40 Abtriebsräder 46, welche drehfest mit Achswellen 48 der Hinterachse 32 verbunden sind. Die Hinterräder 34 und 36 sind über die Achswellen 48 antreibbar. Ferner umfasst das Differential 40 ein drehfest mit dem Korb 42 verbundenes Tellerrad 50, über welches der Korb 42 antreibbar ist. Die Ausgleichsräder 44 stehen in Verzahnungseingriff mit den Abtriebsrädern 46, wobei die Ausgleichsräder 44 und die Abtriebsräder 46 jeweilige Verzahnungen aufweisen, welche miteinander in Eingriff stehen.

Außerdem umfasst der Antriebsstrang 10 ein drehfest mit der Kardanwelle 38 verbundenes Kegelrad 52, welches in Verzahnungseingriff mit dem Tellerrad 50 steht. Dies bedeutet, dass das Tellerrad 50 und das Kegelrad 52 jeweilige Verzahnungen aufweisen, welche miteinander in Eingriff stehen. Dadurch ist beispielsweise das Tellerrad 50 über das Kegelrad 52 von der Kardanwelle 38 antreibbar. Wird das Tellerrad 50 über das Kegelrad 52 von der Kardanwelle 38 angetrieben, so wird dadurch der Korb 42 von dem Tellerrad 50 angetrieben. In der Folge werden die Ausgleichsräder 44 und über diese die Abtriebsräder 46 angetrieben, sodass die Achswellen 48 und darüber die Hinterräder 34 und 36 angetrieben werden.

Aus Fig. 2 ist erkennbar, dass die Lamellenkupplung 12 an einer vorderen, ersten Trennstelle T1 zum Einsatz kommt. Mit anderen Worten wird die Lamellenkupplung 12 genutzt, um die vordere, erste Trennstelle T1 zu realisieren.

An einer hinteren, zweiten Trennstelle T2 kommt eine vorliegend als Klauenkupplung 54 ausgebildete formschlüssige Kopplungseinrichtung zum Einsatz. Die Klauenkupplung 54 ist zwischen einer Koppelstellung und wenigstens einer Entkoppelstellung verstellbar. In der Koppelstellung sind die Hinterräder 34 und 36 über die Klauenkupplung 54 formschlüssig mit der Kardanwelle 38 gekoppelt, sodass in der Koppelstellung Drehmomente zwischen den Hinterrädern 34 und 36 und der Kardanwelle 38 über die Klauenkupplung 54 übertragen werden können beziehungsweise sodass in der Koppelstellung die Hinterräder 34 und 36 formschlüssig über die Klauenkupplung 54 von der Kardanwelle 38 angetrieben werden können. In der Entkoppelstellung jedoch sind die Hinterräder 34 und 36 von der Kardanwelle 38 entkoppelt, sodass in der Entkoppelstellung der Klauenkupplung 54 die Hinterräder 34 und 36 nicht über die Klauenkupplung 54 von der Kardanwelle 38 angetrieben werden können.

Die Klauenkupplung 54 ist dabei in das Differential 40 integriert. Die Klauenkupplung 54 ist bezogen auf einen Drehmomentenfluss von der Kardanwelle 38 zu den Hinterrädern 34 und 36 derart angeordnet, dass die Hinterräder 34 und 36 in der Entkoppelstellung der Klauenkupplung 54 von dem Tellerrad 50 entkoppelt, das heißt nicht über die Klauenkupplung 54 mit dem Tellerrad 50 gekoppelt sind. Das Kegelrad 52 und das Tellerrad 50 bilden einen als 90-Grad-Winkeltrieb ausgebildeten Winkeltrieb, wobei die Hinterräder 34 und 36 in der Koppelstellung der Klauenkupplung 54 über die Klauenkupplung 54 formschlüssig mit dem Winkeltrieb gekoppelt und demzufolge von dem Winkeltrieb über die Klauenkupplung 54 antreibbar sind. In der Entkoppelstellung der Klauenkupplung 54 jedoch sind die Hinterräder 34 und 36 von dem Winkeltrieb entkoppelt, sodass die Hinterräder 34 und 36 nicht über die Klauenkupplung 54 von dem Winkeltrieb angetrieben werden können.

Die Klauenkupplung 54 umfasst dabei beispielsweise wenigstens ein Koppelelement, welches zwischen der Koppelstellung und der Entkoppelstellung verstellbar ist. Dabei ist ein Aktor 56 vorgesehen, mittels welchem das Koppelelement zwischen der Schließstellung und der Offenstellung, insbesondere translatorisch, bewegt werden kann.

Die Kardanwelle 38 und der Winkeltrieb sind beispielsweise Bestandteil eines Sekundär-Antriebsstrangs beziehungsweise bilden einen solchen Sekundär-Antriebsstrang, mittels welchem ein besonders bauraum-, gewichts- und kostengünstiger Vierrad- beziehungsweise Allradantrieb geschaffen werden kann. Durch den Einsatz der Trennstellen T1 und T2 und somit der Lamellenkupplung 12 und der Klauenkupplung 54 kann besonders bedarfsgerecht zwischen einem Zweirad- beziehungsweise Vorderradantrieb und einem Vierrad- beziehungsweise Allradantrieb umgeschaltet werden, sodass der Antriebsstrang 10 als Allrad-Antriebsstrang beziehungsweise als Allradsystem ausgebildet ist. Der Allrad- beziehungsweise Vierradantrieb ist ein erster Betriebszustand, wobei der Zweirad- beziehungsweise Vorderradantrieb ein zweiter Betriebszustand des Antriebsstrangs 10 beziehungsweise des Kraftfahrzeugs ist. Zur Realisierung des ersten Betriebszustands werden die Lamellenkupplung 12 und die Klauenkupplung 54 geschlossen, sodass sich die Lamellenkupplung 12 in ihrer Schließstellung und die Klauenkupplung 54 in ihrer Koppelstellung befinden. Befindet sich dann der Antriebsmotor 14 in seinem Zugbetrieb, in welchem der Antriebsmotor 14 über seine Abtriebswelle Drehmomente bereitstellt, so werden sowohl die Vorderräder 26 und 28 als auch die Hinterräder 34 und 36 von der Abtriebswelle und somit von dem Antriebsmotor 14 angetrieben. Zur Realisierung des zweiten Betriebszustands wird die Klauenkupplung 54 geöffnet und dadurch in ihre Entkoppelstellung verstellt. Außerdem wird die Lamellenkupplung 12, zumindest teilweise beziehungsweise ein Stück, geöffnet und somit beispielsweise aus ihrer Schließstellung in eine von der Schließstellung unterschiedliche zweite Stellung verstellt.

Die Schließstellung der Lamellenkupplung 12 dient dazu, die Kardanwelle 38 über die Lamellenkupplung 12 mit der Abtriebswelle und somit die Hinterachse 32 mit der Vorderachse 24 über die Lamellenkupplung 12 zu koppeln. Mit anderen Worten sind die Achsen in der Schließstellung der Lamellenkupplung 12 über die Lamellenkupplung 12 miteinander gekoppelt. In der von der Schließstellung unterschiedlichen zweiten Stellung der Lamellenkupplung 12 koppelt die Lamellenkupplung 12 die Achsen weniger stark als in der Schließstellung. Dabei ist es vorzugsweise vorgesehen, dass die Lamellenkupplung 12 in der Schließstellung nicht vollständig geöffnet, sondern geschlossen, jedoch weniger weit beziehungsweise weniger stark geschlossen als in der Schließstellung ist, sodass die Achsen in der zweiten Stellung der Lamellenkupplung 12 über die Lamellenkupplung 12 miteinander gekoppelt, jedoch weniger stark als in der Schließstellung miteinander gekoppelt sind.

Hierzu wird beispielsweise zur Realisierung der Schließstellung ein erstes Kupplungsmoment der Lamellenkupplung 12 eingestellt, wobei zur Realisierung der zweiten Stellung ein gegenüber dem ersten Kupplungsmoment geringeres, zweites Kupplungsmoment der Lamellenkupplung 12 eingestellt wird. Dadurch kann die Lamellenkupplung 12 in der Schließstellung höchstens ein erstes Drehmoment übertragen, wobei die Lamellenkupplung 12 in der zweiten Stellung höchstens ein gegenüber dem ersten Drehmoment geringeres, zweites Drehmoment übertragen kann.

Vorzugsweise sind die Lamellenkupplung 12 und somit der Antriebsstrang 10 in der Schließstellung der Lamellenkupplung 12 überpresst, sodass es nicht du Differenzgeschwindigkeiten in der Lamellenkupplung 12 beziehungsweise zwischen den Achsen kommt, das heißt sodass es nicht zu einem Schlupf in der Lamellenkupplung 12 beziehungsweise zwischen den Achsen kommt. In der zweiten Stellung jedoch kann es zu einem Schlupf in der Lamellenkupplung 12 beziehungsweise zwischen den Achsen kommen.

Die Lamellenkupplung 12 umfasst beispielsweise eine Mehrzahl von Lamellen, insbesondere Reiblamellen, welche beispielsweise in axialer Richtung der Lamellenkupplung 12 hintereinander beziehungsweise aufeinanderfolgend angeordnet sind. Zur Realisierung der Schließstellung und somit des ersten Kupplungsmoments werden die Lamellen der Lamellenkupplung 12, insbesondere in axialer Richtung der Lamellenkupplung 12, mittels einer ersten Anpresskraft zusammengepresst. Zur Realisierung der zweiten Stellung werden die Lamellen der Lamellenkupplung 12, insbesondere in axialer Richtung der Lamellenkupplung 12, mittels einer gegenüber der ersten Anpresskraft geringeren, zweiten Anpresskraft zusammengepresst. Dadurch ist das zweite Kupplungsmoment als ein sogenanntes Grundmoment der Lamellenkupplung 12 eingestellt, welche durch das Grundmoment (zweites Kupplungsmoment) vorgespannt ist. Durch diese Vorspannung der Lamellenkupplung 12 kann die Lamellenkupplung 12 ausgehend von der zweiten Stellung besonders schnell, insbesondere weiter, geschlossen und beispielsweise in die Schließstellung bewegt werden. Eine solche Vorspannung der Lamellenkupplung 12 ist somit vorteilhaft, um schnell eingreifen und somit die Lamellenkupplung 12 besonders schnell aus ihrer zweiten Stellung in die Schließstellung zu bewegen, wodurch ein übermäßiger Schlupf zwischen den Achsen vermieden werden kann.

Der Antriebsstrang 10 umfasst ferner einen ersten Drehzahlsensor 58, mittels welchem eine Drehzahl des Tellerrads 50 erfassbar ist beziehungsweise erfasst wird. Der Winkeltrieb weist beispielsweise eine von 1 unterschiedliche Übersetzung auf. Da das Tellerrad 50 über das Kegelrad 52 mit der Kardanwelle 38 gekoppelt ist, korreliert die Drehzahl des Tellerrads 50 mit der Drehzahl der Kardanwelle 38, wobei die Drehzahl des Tellerrads 50 wertemäßig nicht notwendigerweise der Drehzahl der Kardanwelle 38 entsprechen muss. In Abhängigkeit von der Übersetzung des Winkeltriebs kann jedoch die Drehzahl der Kardanwelle 38 aus der mittels des Drehzahlsensors 58 erfassten Drehzahl des Tellerrads 50 berechnet werden.

Der Antriebsstrang 10 umfasst zweite Drehzahlsensoren 60a-d, welche auch als Raddrehzahlsensoren bezeichnet werden. Mittels der Drehzahlsensoren 60a-d sind jeweilige Drehzahlen der Räder (Vorderräder 26 und 28 und Hinterräder 34 und 36) erfassbar. Mit anderen Worten werden mittels der zweiten Drehzahlsensoren 60a-d die jeweiligen Drehzahlen der Vorderräder 26 und 28 und der Hinterräder 34 und 36 erfasst.

Der erste Drehzahlsensor 58 stellt beispielsweise wenigstens ein erstes Signal, insbesondere ein erstes elektrisches Signal, bereit, welches die mittels des Drehzahlsensors 58 erfasste Drehzahl charakterisiert. Der jeweilige Drehzahlsensor 60a-d stellt beispielsweise wenigstens ein zweites Signal, insbesondere wenigstens ein zweites elektrisches Signal, bereit, welches die jeweilige, mittels des jeweiligen Drehzahlsensors 60a-d erfasste Drehzahl des jeweiligen Rads charakterisiert. Die Drehzahlsensoren 58 und 60a-d sind beispielsweise über jeweilige Leitungen 62 und 64 mit einer elektronischen Recheneinrichtung 66 des Antriebsstrangs 10 und somit des Kraftfahrzeugs verbunden, wobei die elektronische Recheneinrichtung 66 auch als Steuergerät bezeichnet wird. Die jeweiligen, die jeweiligen Drehzahlen charakterisierenden Signale werden von den Drehzahlsensoren 58 und 60a-d über die Leitungen 62 und 64 an das Steuergerät übertragen und von dem Steuergerät empfangen. Die Leitungen 62 und 64 sind beispielsweise Bestandteile eines Datenbussystems des Kraftfahrzeugs, wobei das Datenbussystem auch als Datenbus bezeichnet wird und beispielsweise als CAN-Bus (CAN - Controller Area Network) ausgebildet ist. Über den Datenbus werden die jeweiligen Signale an das Steuergerät übertragen und vom Steuergerät empfangen.

Das Steuergerät kann die Klauenkupplung 54, insbesondere den Aktor 56, und die Lamellenkupplung 12 ansteuern, sodass die Klauenkupplung 54 infolge einer solchen Ansteuerung zwischen der Koppelstellung und der Entkoppelstellung verstellt werden kann beziehungsweise sodass die Lamellenkupplung 12 infolge einer solchen Ansteuerung zwischen der Schließstellung und der zweiten Stellung verstellt werden kann. Da das Steuergerät die genannten Signale empfängt, ist es möglich, dass das Steuergerät die Klauenkupplung 54 und die Lamellenkupplung 12 in Abhängigkeit von den erfassten Drehzahlen ansteuert und somit betreibt, sodass beispielsweise die Klauenkupplung 54 in Abhängigkeit von zumindest einer der Drehzahlen zwischen der Entkoppelstellung und der Koppelstellung verstellbar ist beziehungsweise verstellt wird. Alternativ oder zusätzlich ist es denkbar, dass die Lamellenkupplung 12 in Abhängigkeit von wenigstens einer der erfassten Drehzahlen zwischen der Schließstellung und der zweiten Stellung verstellt wird.

Fig. 2 zeigt ein Blockschaltbild zum Veranschaulichen eines Verfahrens zum Betreiben des Antriebsstrangs 10. Bei einem durch einen Block 68 veranschaulichten ersten Schritt des Verfahrens wird, insbesondere mittels des Steuergeräts, wenigstens ein Reibwert einer Fahrbahn, auf welcher sich das Kraftfahrzeug befindet, ermittelt. Mit anderen Worten, ist das Kraftfahrzeug über die Räder an der Fahrbahn abgestützt, wobei das Kraftfahrzeug beispielsweise entlang der Fahrbahn fährt und somit über die Räder auf der Fahrbahn abrollt, so wird bei dem ersten Schritt wenigstens ein Reibwert der Fahrbahn ermittelt. Der Reibwert wird auch als Fahrbahnreibwert oder Straßenreibwert bezeichnet und ist beispielsweise ein, insbesondere dimensionsloses, Maß für eine zwischen den Rädern und der Fahrbahn übertragbare Reibungskraft, welche im Verhältnis zu einer Anpresskraft, mit welcher die Räder gegen die Fahrbahn gepresst werden, übertragen werden kann. Mit anderen Worten erfolgt bei dem ersten Schritt eine sogenannte Reibwertadaption, in deren Rahmen der Reibwert der Fahrbahn ermittelt, insbesondere geschätzt, wird.

Bei einen im Fig. 2 durch einen Block 70 veranschaulichten zweiten Schritt des Verfahrens erfolgt eine adaptive Momentendeckelung, in deren Rahmen in Abhängigkeit von dem ermittelten, insbesondere geschätzten, Reibwert, insbesondere mittels des Steuergeräts, das Grundmoment der Lamellenkupplung 12 eingestellt wird, die in der zweiten Stellung durch das Grundmoment vorgespannt ist.

In Fig. 2 ist durch einen Block 72 veranschaulicht, dass der Reibwert in Abhängigkeit von wenigstens einer der erfassten Drehzahlen der Räder ermittelt wird. Insbesondere kann vorgesehen sein, dass der Reibwert in Abhängigkeit von der erfassten Drehzahl des linken Vorderrads 26 und/oder in Abhängigkeit von der erfassten Drehzahl des rechten Vorderrads 28 und/oder in Abhängigkeit von der erfassten Drehzahl des linken Hinterrads 34 und/oder in Abhängigkeit von der erfassten Drehzahl des rechten Hinterrads 36 ermittelt, insbesondere geschätzt, wird. Ferner ist in Fig. 2 durch einen Block 74 veranschaulicht, dass, insbesondere mittels jeweiliger Beschleunigungssensoren, auf das Kraftfahrzeug wirkende Beschleunigungen, insbesondere eine auf das Kraftfahrzeug wirkende Längsbeschleunigung und eine auf das Kraftfahrzeug wirkende Querbeschleunigung, erfasst werden, wobei der Reibwert in Abhängigkeit von den erfassten, auf das Kraftfahrzeug wirkenden Beschleunigungen ermittelt wird. Dabei kann insbesondere vorgesehen sein, dass eine Gierrate des Kraftfahrzeugs erfasst wird, wobei der Reibwert in Abhängigkeit von der Gierrate ermittelt wird.

Darüber hinaus ist in Fig. 2 durch einen Block 76 veranschaulicht, dass, beispielsweise mittels eines Lenkwinkelsensors, ein Lenkwinkel des Kraftfahrzeugs erfasst wird. Dabei wird der Reibwert in Abhängigkeit von dem erfassten Lenkwinkel ermittelt, insbesondere geschätzt. Beispielsweise sind die Vorderräder 26 und 28 und/oder die Hinterräder 34 und 36 als lenkbare Räder ausgebildet, welche um eine Lenkachse verschwenkt werden können, um dadurch Abbiegemanöver beziehungsweise Kurvenfahrten des Kraftfahrzeugs zu ermöglichen. Durch Verschwenken der jeweiligen Räder um die Lenkachse können jeweilige Lenkwinkel der jeweiligen lenkbaren Räder eingestellt werden, wobei der Lenkwinkel mittels des Lenkwinkelsensors erfasst wird.

Außerdem ist in Fig. 2 durch einen Block 78 ein Antriebsstrangmodell veranschaulicht. Das Antriebsstrangmodell ist ein beispielsweise in einem Speicher des Steuergeräts gespeichertes Rechenmodell, auf dessen Basis ein Verhalten, insbesondere ein erwartetes Verhalten, des Antriebsstrangs 10 und somit des Kraftfahrzeugs insgesamt mittels des Steuergeräts berechnet wird.

Das Kraftfahrzeug umfasst wenigstens ein vom Fahrer des Kraftfahrzeugs betätigbares und dadurch bewegbares Bedienelement, mittels welchem eine Last des Antriebsmotors 14 und somit das jeweilige, von dem Antriebsmotor 14 über die Abtriebswelle bereitzustellende Drehmoment einstellbar sind. Das Bedienelement ist beispielsweise als Pedal ausgebildet, welches auch als Fahrpedal bezeichnet wird und beispielsweise um eine Schwenkachse in unterschiedliche Pedalstellungen verschwenkbar ist. Dabei kann der Fahrer mit seinem Fuß das Fahrpedal betätigen und dadurch in unterschiedliche Pedalstellungen bewegen, wobei die jeweilige Pedalstellung mit einem jeweiligen, von dem Antriebsmotor 14 bereitzustellen Drehmoment korrespondiert. Beispielsweise mittels eines Pedalsensors wird die Pedalstellung des Fahrpedals erfasst, wobei - wie in Fig. 2 durch einen Block 80 veranschaulicht ist - die erfasste Pedalstellung dem Antriebsstrangmodell zugeführt wird. Somit wird beispielsweise das erwartete Verhalten in Abhängigkeit von der erfassten Pedalstellung berechnet. Ferner wird - wie in Fig. 2 durch einen Block 82 veranschaulicht - das jeweilige, von dem Antriebsmotor 14 bereitgestellte Drehmoment, welches auch als Motormoment bezeichnet wird, ermittelt und dem Antriebsstrangmodell zugeführt, sodass das erwartete Verhalten beispielsweise in Abhängigkeit von dem ermittelten Motormoment berechnet und somit ermittelt wird. Das berechnete, erwartete Verhalten wird der Reibwertadaption zugeführt, sodass der Reibwert in Abhängigkeit von dem berechneten Verhalten ermittelt wird.

Der ermittelte und beispielsweise geschätzte Reibwert wird schließlich der adaptiven Momentendeckelung zugeführt, sodass das Grundmoment der Lamellenkupplung 12 in Abhängigkeit von dem ermittelten beziehungsweise geschätzten Reibwert eingestellt wird.

Aus Fig. 1 ist erkennbar, dass der Sekundär-Antriebsstrang in dem zweiten Betriebszustand stillgelegt ist, da der Sekundär-Antriebsstrang, welcher auch als sekundärer Antriebsstrang bezeichnet wird, weder über die Lamellenkupplung 12 von dem Antriebsmotor 14 oder von den Vorderrädern 26 und 28, noch über die Klauenkupplung 54 von den Hinterrädern 34 und 36 angetrieben werden kann. Dadurch ist der Antriebsstrang 10 als bedarfsgerechtes Allradsystem ausgebildet, wobei der sekundäre Antriebsstrang besonders gewichts-, bauraum- und kostengünstig ausgestaltet werden kann. Dadurch können der Energieverbrauch, insbesondere der Kraftstoffverbrauch, und somit die CO₂-Emissionen des Kraftfahrzeugs besonders gering gehalten werden. Mit anderen Worten können zur Erzielung einer Verbrauchsersparnis die Kardanwelle 38 und das Tellerrad 50 zumindest temporär, insbesondere in dem zweiten Betriebszustand, stillgelegt werden, wodurch drehzahl- und momentenabhängige Verluste besonders gering gehalten werden können. Bezogen auf eine gesamte Betriebsdauer des Kraftfahrzeugs wird der zweite Betriebszustand wesentlich häufiger als der erste Betriebszustand eingestellt. Durch den häufigen zweiten Betriebszustand und einem damit verbundenen geringeren Lastkollektiv beziehungsweise Momentenniveau kann der sekundäre Antriebsstrang besonders klein ausgelegt werden, wodurch Gewicht- und Bauteilkosten eingespart werden können. Die kleine beziehungsweise filigrane Dimensionierung des sekundären Antriebsstrangs erhöht jedoch dessen Schwingungsneigung, insbesondere bei Abbiegemanövern, wobei die Schwingungsneigung zu akustischen Beeinträchtigungen führen kann.

Die Vorderräder 26 und 28 sind sowohl dann von dem Antriebsmotor 14 antreibbar, wenn die Lamellenkupplung 12 und die Klauenkupplung 54 geschlossen sind beziehungsweise sich in ihrer Schließstellung beziehungsweise in ihrer Koppelstellung befinden als auch dann, wenn die Lamellenkupplung 12 und die Klauenkupplung 54 geöffnet sind beziehungsweise wenn sich die Lamellenkupplung 12 in ihrer zweiten Stellung und die Klauenkupplung 54 in ihrer Entkoppelstellung befinden. Dadurch können die Hinterräder 34 und 36 beziehungsweise die Hinterachse 32 bedarfsgerecht zugeschaltet beziehungsweise aktiviert werden, indem die Lamellenkupplung 12 und die Klauenkupplung 54 geschlossen werden. Ferner können die Hinterräder 34 und 36 beziehungsweise die Hinterachse 32 bedarfsgerecht abgeschaltet, das heißt deaktiviert werden, indem die Lamellenkupplung 12 in ihre zweite Stellung und die Klauenkupplung 54 in ihre Entkoppelstellung bewegt wird. Durch Zuschalten beziehungsweise Aktivieren der Hinterachse 32 ist der erste Betriebszustand (Vierrad- beziehungsweise Allradantrieb) eingestellt, wobei durch Abschalten beziehungsweise Deaktivieren der Hinterachse 32 der zweite Betriebszustand (Zweirad- beziehungsweise Vorderradantrieb) eingestellt ist.

Durch die Einstellung und somit beispielsweise durch die Variation des Grundmoments der Lamellenkupplung 12 können übermäßige Schwingungen des Antriebsstrangs 10 und somit übermäßige Geräusche vermieden werden, sodass akustische Beeinträchtigungen vermieden werden können. In der Folge kann besonders hoher Fahrkomfort realisiert werden. In der zweiten Stellung kann die Lamellenkupplung 12 so weit wie möglich geschlossen, jedoch so weit wie nötig geöffnet sein, um dadurch einerseits übermäßige Schwingungen des Antriebsstrangs 10 zu vermeiden und andererseits die Achsen vorteilhaft miteinander zu koppeln, um dadurch eine hohe Traktion des Kraftfahrzeugs sicherzustellen. Dadurch kann ein Zielkonflikt zwischen der Realisierung einer vorteilhaften, hohen Traktion und der Vermeidung von Schwingungen gelöst oder zumindest gelockert werden.

Insgesamt ist erkennbar, dass das beispielsweise stationäre und lenkwinkelbasierte Grundmoment der Lamellenkupplung 12 in Abhängigkeit von dem lokal geschätzten Reibwert erhöht wird, um vorteilhafte Traktionseigenschaften sicherzustellen. Die lokale Schätzung des Reibwerts erfolgt beispielsweise über einen Abgleich der modellbasierten Erwartung des Fahrzeugverhaltens mit den gemessenen Drehzahlen beziehungsweise Geschwindigkeiten der Räder, Beschleunigung, der Gierrate und dem Lenkwinkel.

Durch die Schätzung des Reibwerts kann eine Reibwertinformation erhalten werden. Auf Basis dieser Reibwertinformation, auf Basis von geschätzten Radlasten und auf Basis eines Drehmoments des Antriebsstrangs 10 beziehungsweise im Antriebsstrang 10 kann über ein gerechnetes Fahrzeugmodell ein an der als Primärachse ausgebildeten Vorderachse 24 anliegendes Überschussmoment anteilig an die als Sekundärachse ausgebildete Hinterachse 32 geleitet werden.

Somit wird das Motormoment, welches auch als Antriebsmoment bezeichnet wird, bei trockener Fahrbahn und somit beispielsweise hohem Reibwert primär an der Vorderachse 24 abgesetzt, und ein Verspannen des Antriebsstrangs 10 und somit unerwünschte akustische Rückmeldungen können vermieden werden. Bei hohen Antriebsmomenten beziehungsweise Antriebskräften oder bei niedrigen Reibwerten, insbesondere bei nasser Fahrbahn, wird entsprechend die Sekundärachse stärker einbezogen, um das Antriebsmoment abzusetzen. Jedoch ist in diesen Situationen auch das Verspannungsrisiko aufgrund des hohen Radschlupfes deutlich geringer.

Dem Antriebsstrang 10 und dem Verfahren liegt dabei die Idee zugrunde, dass bei niedrigen Reibwerten Ausgleichsbewegungen, in deren Folge übermäßige Verspannungen im Antriebsstrang 10 abgebaut werden können, über die Fahrbahn erfolgen können. Bei hohen Reibwerten können solche Ausgleichsbewegungen über die Fahrbahn nicht beziehungsweise geringfügiger erfolgen. Somit wird beispielsweise bei hohen Reibwerten das Grundmoment an der Lamellenkupplung 12 reduziert, um Ausgleichsbewegungen am Antriebsstrang 10 zuzulassen. Dadurch können übermäßige Verspannungen und somit übermäßige Schwingungen und unerwünschte Geräusche vermieden werden. Eine solche Reduzierung des Grundmoments kann bei hohen Reibwerten zugelassen werden, da die Achsen beziehungsweise die Räder aufgrund des hohen Reibwerts eine gute Haftung zur Fahrbahn haben. Bei niedrigen Reibwerten kann das Grundmoment erhöht werden, um die Achsen gegenüber einem niedrigeren Grundmoment stärker miteinander zu koppeln. Dadurch kann ein übermäßiger Schlupf zwischen den Achsen vermieden werden, sodass eine besonders vorteilhafte Traktion sichergestellt werden kann. Da durch den geringen Reibwert Ausgleichsbewegungen zwischen den Achsen beziehungsweise in dem Antriebsstrang über die Fahrbahn möglich sind, kommt es nicht zu übermäßigen Verspannungen und somit nicht zu unerwünschten Geräuschen.

## Patentansprüche

1. Verfahren zum Betreiben einer Kupplung (12) eines die Kupplung (12), einen Antriebsmotor (14), eine von dem Antriebsmotor (14) antreibbare erste Räder (26, 28) aufweisende Primärachse (24) als erste Achse und eine über die Kupplung (12) von dem Antriebsmotor (14) antreibbare zweite Räder (34, 36) aufweisende Sekundärachse (32) als zweite Achse umfassenden Antriebsstrangs (10) eines Kraftfahrzeugs, bei welchem die Kupplung (12) zwischen einer Schließstellung, in welcher ein erstes Kupplungsmoment der Kupplung (12) eingestellt ist, und wenigstens einer von der Schließstellung unterschiedlichen zweiten Stellung, in welcher ein gegenüber dem ersten Kupplungsmoment geringeres zweites Kupplungsmoment der Kupplung (12) eingestellt ist, verstellt wird, mit den Schritten:
- Ermitteln wenigstens eines Reibwerts einer Fahrbahn, auf welcher sich das Kraftfahrzeug befindet; und
- In Abhängigkeit von dem ermittelten Reibwert: Einstellen eines Grundmoments der Kupplung (12), welche in der zweiten Stellung durch das Grundmoment vorgespannt ist;
**dadurch gekennzeichnet, dass**
mittels einer elektronischen Recheneinrichtung (66) des Kraftfahrzeugs anhand wenigstens eines Rechenmodells ein erwartetes Verhalten des Kraftfahrzeugs berechnet wird, wobei der Reibwert in Abhängigkeit von dem berechneten Verhalten ermittelt wird.

2. Verfahren nach Anspruch 1,
**dadurch gekennzeichnet, dass**
das Grundmoment in Abhängigkeit von einem Lenkwinkel des Kraftfahrzeugs eingestellt wird.

3. Verfahren nach Anspruch 1 oder 2,
**dadurch gekennzeichnet, dass**
eine Drehzahl wenigstens eines der Räder erfasst wird, wobei der Reibwert in Abhängigkeit von der erfassten Drehzahl ermittelt wird.

4. Verfahren nach einem der vorhergehenden Ansprüche,
**dadurch gekennzeichnet, dass**
der Reibwert in Abhängigkeit von einem Lenkwinkel des Kraftfahrzeugs ermittelt wird.

5. Verfahren nach einem der vorhergehenden Ansprüche,
**dadurch gekennzeichnet, dass**
wenigstens eine auf das Kraftfahrzeug wirkende Beschleunigung erfasst wird, wobei der Reibwert in Abhängigkeit von der erfassten Beschleunigung ermittelt wird.

6. Verfahren nach einem der vorhergehenden Ansprüche,
**dadurch gekennzeichnet, dass**
der Reibwert in Abhängigkeit von einer Gierrate des Kraftfahrzeugs ermittelt wird.

7. Verfahren nach einem der vorhergehenden Ansprüche,
**dadurch gekennzeichnet, dass**
als die Kupplung (12) eine reibschlüssige Kupplung, insbesondere eine Lamellenkupplung (12), verwendet wird.

8. Kraftfahrzeug, mit einem Antriebsstrang (10), welcher zum Durchführen eines Verfahrens nach einem der vorhergehenden Ansprüche ausgebildet ist.

## Claims

1. Method for operating a clutch (12) of a drive train (10) of a motor vehicle, comprising the clutch (12), a drive motor (14), a primary axis (24) having first wheels (26, 28), which can be driven by the drive motor (14), as a first axis, and a secondary axis (32) having second wheels (34, 36), which can be driven by the drive motor (14) via the clutch (12), as a second axis, wherein the clutch (12) is adjusted between a closed position, in which a first coupling torque of the clutch (12) is set, and at least one second position, which is different from the closed position and in which a lower second coupling torque of the clutch (12), relative to the first coupling torque, is set, comprising the steps:
- determining at least one coefficient of friction of a roadway on which the motor vehicle is located; and
- depending on the determined coefficient of friction: adjusting a basic torque of the clutch (12), which is pre-tensioned by the basic torque in the second position;
**characterised in that**
an expected behaviour of the motor vehicle is calculated by means of an electronic computing device (66) of the motor vehicle on the basis of at least one computer model, wherein the coefficient of friction is determined depending on the calculated behaviour.

2. Method according to claim 1,
**characterised in that**
the basic torque is set depending on a steering angle of the motor vehicle.

3. Method according to claim 1 or 2,
**characterised in that**
a speed of at least one of the wheels is detected, wherein the coefficient of friction is determined depending on the detected speed.

4. Method according to any one of the preceding claims,
**characterised in that**
the coefficient of friction is determined depending on a steering angle of the motor vehicle.

5. Method according to any one of the preceding claims,
**characterised in that**
at least one acceleration acting on the motor vehicle is detected, wherein the coefficient of friction is determined depending on the detected acceleration.

6. Method according to any one of the preceding claims,
**characterised in that**
the coefficient of friction is determined depending on a yaw rate of the motor vehicle.

7. Method according to any one of the preceding claims,
**characterised in that**
a friction clutch is used as the clutch (12), in particular a multiple-plate clutch (12).

8. Motor vehicle, comprising a drive train (10), which is designed to perform a method according to any one of the preceding claims.

## Revendications

1. Procédé de fonctionnement d'un embrayage (12) d'une chaîne cinématique (10) d'un véhicule automobile comprenant l'embrayage (12), un moteur d'entraînement (14), un essieu primaire (24) présentant des premières roues (26, 28) entraînables par le moteur d'entraînement (14) comme premier essieu et un essieu secondaire (32) présentant des secondes roues (34, 36) entraînables par le biais de l'embrayage (12) par le moteur d'entraînement (14) comme second essieu, pour lequel l'embrayage (12) est déplacé entre une position de fermeture, dans laquelle un premier couple de l'embrayage (12) est réglé, et au moins une seconde position différente de la position de fermeture, dans laquelle un second couple de l'embrayage (12) plus faible par rapport au premier couple d'embrayage est réglé, avec les étapes :
- la détermination d'au moins une valeur de frottement d'une chaussée, sur laquelle le véhicule automobile se trouve ; et
- en fonction de la valeur de frottement déterminée : le réglage d'un couple de base de l'embrayage (12) qui est précontraint dans la seconde position par le couple de base ;
**caractérisé en ce que**
un comportement attendu du véhicule automobile est calculé au moyen d'un dispositif de calcul (66) électronique du véhicule automobile à l'aide d'au moins un modèle de calcul, dans lequel la valeur de frottement est déterminée en fonction du comportement calculé.

2. Procédé selon la revendication 1,
**caractérisé en ce que**
le couple de base est réglé en fonction d'un angle de braquage du véhicule automobile.

3. Procédé selon la revendication 1 ou 2,
**caractérisé en ce que**
une vitesse de rotation d'au moins une des roues est détectée, dans lequel la valeur de frottement est déterminée en fonction de la vitesse de rotation détectée.

4. Procédé selon l'une des revendications précédentes,
**caractérisé en ce que**
la valeur de frottement est déterminée en fonction d'un angle de braquage du véhicule automobile.

5. Procédé selon l'une des revendications précédentes,
**caractérisé en ce que**
au moins une accélération agissant sur le véhicule automobile est détectée, dans lequel la valeur de frottement est déterminée en fonction de l'accélération détectée.

6. Procédé selon l'une des revendications précédentes,
**caractérisé en ce que**
la valeur de frottement est déterminée en fonction d'un taux de lacet du véhicule automobile.

7. Procédé selon l'une des revendications précédentes,
**caractérisé en ce que**
un embrayage à friction, en particulier un embrayage à disques multiples (12) est utilisé comme embrayage (12).

8. Véhicule automobile, avec une chaîne cinématique (10) qui est réalisée pour la réalisation d'un procédé selon l'une des revendications précédentes.
